Europäisches Patentamt

European Patent Office

Office européen des brevets

(19)

(11) Publication number: **0 176 113**
**A1**

(12) **EUROPEAN PATENT APPLICATION**

(21) Application number: **85201123.8**

(22) Date of filing: **09.07.85**

(51) Int. Cl.⁴: **A 23 L 1/182**

(30) Priority: **20.09.84 IT 2274584**

(43) Date of publication of application:
**02.04.86 Bulletin 86/14**

(84) Designated Contracting States:
**AT BE CH DE FR GB LI LU NL SE**

(71) Applicant: **RISERIE VIRGINIO CURTI S.p.A.**
**Piazza Cordusio 2**
**I-20121 Milano(IT)**

(72) Inventor: **Curti, Edoardo**
**Via del Sagredo 10**
**I-20121 Milano(IT)**

(72) Inventor: **Fossati, Giovanni**
**Via Dalmazia 2**
**I-27029 Vigevano, Pavia(IT)**

(74) Representative: **Appoloni, Romano et al,**
**ING. BARZANO' & ZANARDO MILANO S.p.A. Via**
**Borgonuovo 10**
**I-20121 Milano(IT)**

(54) Process for the treatment of rice to the purpose of improving its quality characteristics on cooking.

(57) The object of the invention is a process for the treatment
of rice, to the purpose of improving the quality characteris-
tics thereof on cooking, characterized in that to raw white rice
at least a natural proteinic fraction capable of agglutinating
on to the rice grains is added.

1.

0176113

<u>Disclosure</u>

It is known that during the cooking of white refined rice drawbacks may occur which influence in their turn the qualitative and organoleptic characteristics of this food. Reference is made in particular to an excessive absorption of cooking water by the grains of rice, with consequent swelling thereof; to an escape out of said grains of prevailingly starchy substances, with loss of consistency; and to a substantial disaggregation of rice grains.

In this context, it is e.g. known from Italian Pat. Application N° 22127 A/84 in the same Applicant's name, to improve the compactness of the grains after the cooking and the consistency of them by means of a process consisting in the treatment of white rice with rice oil.

It has now been surprisingly found, and this is the object of the present invention, that a noticeable improvement of the qualitative characteristics of rice on cooking can be obtained by adding to raw white rice at least a natural proteinic fraction capable og agglutinating on to rice grains, i.e., of coagulating on their surface.

Such a proteinic fraction can be selected e.g. among the following ones: animal albumin, such as that obtained from serum or from eggs; vegetable albumin, such as that obtained from wheat, from rice, from corn, from soybean, and so on; glutenin of wheat; glutelin of rice; prolamines. Each natural proteinic fraction capable of agglutinating with rice grains is however useful to the purposes of the invention.

For this reason, these proteinic fractions must be mostly insoluble in water, either due to their nature

2.

0176113

(examples are zein of corn, glutenin of wheat and glutelin of rice, soluble in alkalies only; prolamines of rice and of wheat, soluble in alcohol, etc.); or because on contact with boiling water they are denaturated (examples are albumins of all types; animal albumins from serum or from eggs, or vegetable albumins from rice, from wheat, from corn, from soybean, and so on, which are denaturated above 60°C).

The albumins, in particular, are proteinic fractions present in nearly all living beings. The most common thereof, more easily extractable and hence also the less expensive, is ovalbumin, which is commercially available as a very thin dried powder.

According to the invention to the purpose of coating these types of compounds of proteinic character on the surface of rice grains, it is enough to add them to the rice as a very thin powder and carefully blend such a mixture; or if water-soluble they can be dissolved in water at room temperature, preparing a very concentrated solution thereof, then wetting rice very evenly with such a solution, subsequently drying the rice by means of hot air; or they can also bu suspended in a vegetable oil (soybean oil, sunflower oil, grind stone oil, rice oil, etc.) or in a mineral oil (e.g., liquid paraffins), subsequently oiling·the rice with this suspension.

As an example absolutely not limitative, but report to the only purpose of better understanding characteristics and advantages of the invention, the following is described:

Example

To rice oil an amount ranging from 5 to 10% of albumin of very thin granulometry is added and kept suspended by stirring.

So-treated rice is then cooked. In the following Table I the values are reported of some qualitative parameters measured on Arborio rice, oiled with the above rice oil (LGR) to which 5% and 10% of dry ovalbumin has been added, compared with the same rice either simply oiled with the same straight oil or refined only.

TABLE I

| R I C E | Exact cooking time in boiling water (minutes) | Swelling Index | Disaggregation Degree (%) | Residual Solubility Degree (%) | Overall Disaggregation (%) | Cooking Resistance (%) |
|---|---|---|---|---|---|---|
| Refined Arborio | 15 | 4.92 | 15.20 | 4.51 | 19.71 | 20.61 |
| Arborio + LGR* 1.8% | 16 | 4.31 | 14.01 | 4.79 | 18.80 | 19.19 |
| Arborio + LGR* 2.0% | 16 | 4.23 | 13.99 | 3.74 | 17.73 | 18.93 |
| Arborio + (LGR* 1.8% + 5% A) | 16 | 4.11 | 13.67 | 3.17 | 16.84 | 17.56 |
| Arborio + (LGR 1.8% + 10% A) | 17 | 3.98 | 13.28 | 2.48 | 15.76 | 17.45 |

Notes:

+ LG R* = rice oiled with refined rice oil according to Patent Application  N° 22127 A/84

   A = dry ovalbumin added  to rice oil just before the oiling step according to the present invention

As it can be observed from the values reported in the Table, the treatment with oil to which albumin fractions have been added notably improves both the compactness of the grains (lower swelling), and the consistency thereof (the disaggregation degree, the residual solubility degree and consequently also the overall disaggregation decrease), and the resistance to cooking, not only as compared to refined rice, but also as compared to simply oiled rice.

In particular, the addition of 10% of albumin to the oil causes an increase of grain compactness of about 19% relatively to refined rice and of more than 7% relatively to rice oiled with an identical dose of straight rice oil; an increase of consistency (decrease of overall disaggregation) respectively of 20% and of about 16%; and an improvement of resistance to cooking respectively of more than 15% and of 9%.

Similar results can be obtained from other varieties, of which variety Vialone Nano (Table II) is a further example.

TABLE II

| R I C E | Exact cooking time in boiling water (minutes) | Swelling Index | Disaggregation Degree (%) | Residual Solubility Degree (%) | Overall Disaggregation (%) | Cooking Resistance (%) |
|---|---|---|---|---|---|---|
| Refined Vialone Nano | 12 | 5.38 | 17.67 | 3.67 | 21.32 | 24.75 |
| Vialone Nano + LGR* 1.8% | 13 | 4.87 | 17.40 | 3.78 | 21.26 | 23.86 |
| Vialone Nano + (LGR* 1.8% + A 5%) | 14 | 4.38 | 16.45 | 3.45 | 19.98 | 22.01 |
| Vialone Nano + (LGR* 1.8% + A 10%) | 14 | 4.54 | 15.91 | 3.25 | 19.24 | 20.84 |

Notes:

+ LGR* = rice oiled with refined rice oil according to Patent Application N° 22127 A/84

A = dry ovalbumin added to rice oil just before the oiling step according to the present invention

0176113

Indipendently from the hereinabove example, the invention in general allows the following advantages to be accomplished: (a) lower cooking-water absorption capability by the grains and hence lower swelling thereof; (b) lower escape from the grains of substances (mostly of starchy character) and hence greater consistency of the grains; (c) the phenomenon indicated under item (b) persists even when the cooking is prolonged beyond the right time, with a consequent greater resistance to cooking of the same rice.

C l a i m s

1. Process for the treament of rice to the purpose of improving the qualitative characteristics on cooking thereof, characterized in that to raw white rice at least a natural proteinic fraction capable of agglutinating on to rice grains is added.

2. Process according to claim 1, characterized in that said proteinic fraction is selected among the following ones: animal albumin, such as that obtained from serum or from eggs; vegetable albumin, such as that obtained from wheat, from rice, from corn, from soybean, and so on; glutelin of wheat; glutelin of rice; prolamines.

3. Process according to claim 1, characterized in that the addition of said proteinic fraction to rice is carried out by preparing such a fraction as a very thin powder and thereafter admixing it to the grains of rice.

4. Process according to claim 1, characterized in that said proteinic fraction, if water-soluble, is added to rice by dissolving it in water up to a concentrated solution, thereafter wetting rice grains with said solution, and finally drying said rice grains.

5. Process according to claim 1, characterized in that the addition of said proteinic fraction to rice is carried out by suspending said fraction in an either vegetable or mineral oil, and finally oiling said rice grains with said suspension.

6. Process according to claim 5, characterized in that said vegetable oil is selected among edible seed oils, such as: soybean oil; sunflower oil; grind stone oil; rice oil.

7. Process according to claim 6, characterized in that said oil is rice oil.

8. Process according to claim 5, characterized in that said mineral oil is a liquid paraffin.

9. Rice treated by means of the process according to at least one of preceding claims.

European Patent Office

**EUROPEAN SEARCH REPORT**

**0176113**
Application number

EP   85 20 1123

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 327 528  (INTERNATIONAL FLAVORS & FRAGRANCES INC.) * claims 1-4 * | 1,2 | A 23 L    1/182 |
| A | DE-A-2 538 076  (ANDO) * claims 1,3 * | | |
| A | DE-A-1 767 016  (PFIZER CORP.) * claims 1-3 * | | |

TECHNICAL FIELDS SEARCHED (Int. Cl.4)

A 23 L    1/00

The present search report has been drawn up for all claims

| Place of search | Date of completion of the search | Examiner |
|---|---|---|
| BERLIN | 09-12-1985 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82